(19) Europäisches Patentamt European Patent Office Office européen des brevets

(11) **EP 3 164 743 B1**

(12) **FASCICULE DE BREVET EUROPEEN**

(45) Date de publication et mention
de la délivrance du brevet:
**24.03.2021 Bulletin 2021/12**

(21) Numéro de dépôt: **14747084.3**

(22) Date de dépôt: **03.07.2014**

(51) Int Cl.:
***G01V 99/00*** *(2009.01)*

(86) Numéro de dépôt international:
**PCT/FR2014/051714**

(87) Numéro de publication internationale:
**WO 2016/001491 (07.01.2016 Gazette 2016/01)**

(54) **PROCEDE DE DETERMINATION DE CAVES GEOLOGIQUES**

VERFAHREN ZUR BESTIMMUNG VON GEOLOGISCHEN HÖHLEN

METHOD FOR DETERMINING GEOLOGICAL CAVES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**10.05.2017 Bulletin 2017/19**

(73) Titulaire: **TOTAL SE**
**92400 Courbevoie (FR)**

(72) Inventeurs:
• **BIVER, Pierre**
**64000 Pau (FR)**
• **LABOURDETTE, Richard**
**64000 Pau (FR)**

(74) Mandataire: **Plasseraud IP**
**66, rue de la Chaussée d'Antin**
**75440 Paris Cedex 09 (FR)**

(56) Documents cités:
**FR-A1- 2 918 777     FR-A1- 2 994 309**

**EP 3 164 743 B1**

**Description**

La présente invention concerne le domaine la détermination de caves dans des modèles géologique et notamment le domaine de la modélisation des phénomènes de diagénèse karstique de type karst insulaire dans les réservoirs carbonatés.

On désigne par l'expression « karstification d'une roche » le phénomène par lequel une roche est façonnée par dissolution de carbonates, par exemple, dans de l'eau. L'eau s'infiltre par des interstices de la roche, par exemple des pores ou des fractures. Cette infiltration augmente la taille de ces interstices du fait de la dissolution de carbonates de la roche dans l'eau infiltrée. Des fractures et des cavités (ou caves) peuvent ainsi être formées.

L'eau peut typiquement être de l'eau de pluie rendue acide par du dioxyde de carbone de l'atmosphère ou du sol. La provenance de l'eau peut être autre, par exemple des remontées hydrothermales.

La roche peut, par exemple, comprendre du calcaire.

La modélisation de la karstification est utile en géologie et dans le cadre de l'industrie pétrolière car elle peut influer directement sur l'estimation des ressources d'hydrocarbures présentes dans les sous-sols.

Par ailleurs, des karstifications particulières peuvent exister : insulaire, continentale ou encore hydrothermale. La karstification dite « insulaire » est une karstification réalisée notamment dans les domaines particuliers que sont les îles et le littoral par dissolution des carbonates dans la zone de battement de la nappe aquifère et dans la zone dite du « biseau salé » (contact chimique entre l'eau douce et l'eau de mer).

Lors de la modélisation du phénomène de karstification, la modélisation des caves a été que peu prise en compte. Pour autant, ce phénomène peut être très importante et ainsi très impactant sur le modèle obtenu, notamment dans le cadre de karstification insulaire. FR2994309 divulgue un procédé de modélisation de karstification insulaire.

De plus, les simulations de zones karstiques en domaines insulaires ne peuvent pas être réalisées à l'aide d'outils de simulations karstiques usuelles. En effet, les battements de la nappe aquifère et la présence d'un biseau salé sont particuliers aux domaines insulaires et littoraux. Ces caractéristiques propres influent notablement sur la formation du karst dans ces domaines.

Il existe ainsi un besoin pour permettre une modélisation efficace et correcte des phénomènes de karstification de type « cave » dans le sous-sol.

La présente invention vient améliorer la situation.

La présente invention vise alors un procédé de procédé de détermination d'une localisation de caves karstifiées dans un modèle géologique selon la revendication 1.

Le modèle géologique est, par exemple, un modèle maillé en trois dimensions.

Avantageusement, la troisième surface déterminée est verticale dans le modèle, un axe du repère du modèle définissant cette verticale.

La détermination de la présence de caves peut être représentée par une variable binaire, ladite variable valant 0 si des caves sont présentes au point courant, 1 si des caves ne sont pas présentes au point courant.

En outre, la détermination de la présence de caves pour ledit point courant peut être également fonction d'un variogramme ou d'une fonction de variance de « l'interdistance » ou encore d'une fonction de covariance.

Dans un mode de réalisation particulier de l'invention, le procédé peut comprendre en outre :

- pour chaque point courant des points pour lesquels une présence de caves est déterminée, détermination de la taille desdites caves, la détermination de la taille desdites caves étant fonction d'au moins une distribution de tailles de caves et de la valeur de distance déterminée pour ledit point courant.

En outre, le procédé peut comprendre :

- pour chaque point courant des points pour lesquels une présence de caves est déterminée, détermination d'un nombre de caves, la détermination dudit nombre de caves étant fonction d'au moins une distribution de nombre de caves et de la valeur de distance déterminée pour ledit point courant.

Avantageusement, le procédé peut comprendre en outre :

- pour chaque point courant des points pour lesquels une présence de caves est déterminée,

  - détermination d'un effondrement de caves pour ledit point courant, cette détermination étant fonction d'une probabilité d'effondrement, et

  - en cas de présence de caves déterminée, multiplication d'une proportion de caves associée au point courant par un facteur compris entre 3 et 5.

2

La probabilité d'effondrement peut être de 0 pour certains points courants et de 1 pour d'autres points courants.

La proportion de caves représente le ratio entre le volume des caves sur le volume unitaire associé au point courant (ex. de la maille associée au point courant). Ainsi, cette multiplication revient à augmenter la part de « caves » dans le modèle pour un point donné.

Ainsi, cette multiplication permet de définir le volume effondré, correspondant au foisonnement des roches, matériau « brechifié » de caractéristiques intermédiaires entre la matrice et les caves préservées non effondrées.

La multiplication de la proportion de caves associée au point courant peut être effectuée par un facteur 4.

Expérimentalement, cette valeur de 4 est considérée comme proche de la réalité concernant l'augmentation de volume affecté par des caves lors d'un effondrement (i.e. volume de roche fracturée par l'effondrement). Un volume plus important encore (facteur 10 à 40 en pratique) peut correspondre à une fragilisation de la matrice entourant les caves, on parle de collapse étendu.

Par ailleurs, si la proportion de caves associée au point courant devient supérieure à un seuil prédéterminé :

- la part de la proportion de caves dépassant ledit seuil prédéterminé peut être ajoutée à la porosité de points adjacents au point courant,
- la proportion de caves du point courant peut également être fixée au seuil prédéterminé.

Par ailleurs, différents types de processus de déports latéraux peuvent être envisagés comme la propagation verticale pour un effondrement simple, propagation par fronts pour un collapse étendu, etc.

En outre l'invention vise également un procédé de détermination de caractéristiques de perméabilité d'un modèle selon la revendication 8.

Ainsi, la présente invention vise également un dispositif de détermination d'une localisation de caves karstifiées dans un modèle selon la revendication 10.

Un programme informatique, mettant en œuvre tout ou partie du procédé décrit ci-avant, installé sur un équipement préexistant, est en lui-même avantageux.

Ainsi, la présente invention vise également un programme informatique comportant des instructions pour la mise en œuvre du procédé précédemment décrit, lorsque ce programme est exécuté par un processeur.

Ce programme peut utiliser n'importe quel langage de programmation (par exemple, un langage-objet ou autre), et être sous la forme d'un code source interprétable, d'un code partiellement compilé ou d'un code totalement compilé.

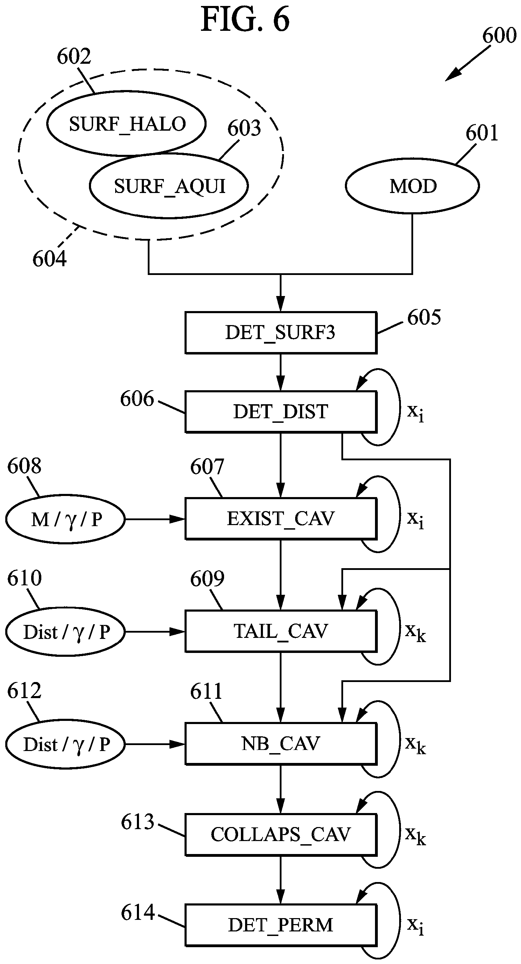

La figure 6 décrite en détail ci-après peut former l'organigramme de l'algorithme général d'un tel programme informatique.

D'autres caractéristiques et avantages de l'invention apparaîtront encore à la lecture de la description qui va suivre. Celle-ci est purement illustrative et doit être lue en regard des dessins annexés sur lesquels :

- la figure 1 illustre une coupe verticale d'un modèle géologique et permettant de détailler le calcul des valeurs de distance dans un mode de réalisation particulier de l'invention;

- la figure 2 illustre une coupe horizontale dudit modèle géologique ;

- la figure 3 est un exemple de variogramme dans un mode de réalisation particulière ;

- la figure 4a et 4b illustrent le phénomène d'effondrement des caves dans un mode de réalisation particulière de l'invention ;

- la figure 5 illustre un exemple de calcul de perméabilité d'une maille selon un axe dans un mode de réalisation particulière de l'invention ;

- la figure 6 illustre un ordinogramme d'un procédé de détermination dans un mode de réalisation selon l'invention ;

- la figure 7 représente un exemple de dispositif de détermination dans un mode de réalisation de l'invention.

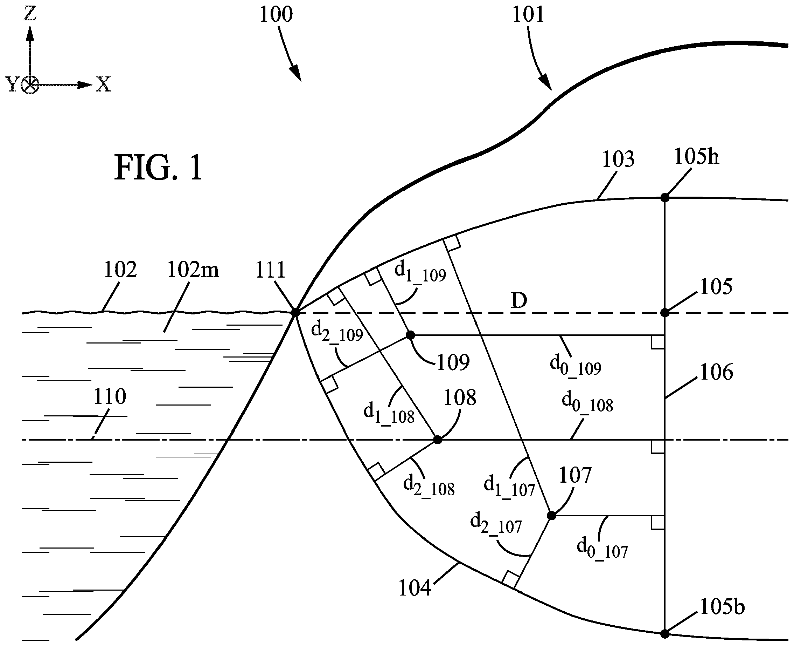

La figure 1 illustre une coupe verticale 100 d'un modèle géologique et permettant de détailler le calcul des valeurs de distance dans un mode de réalisation particulier de l'invention.

Dans cette coupe 100, la ligne 101 représente la surface externe d'une formation géologique, par exemple une ile ou un rivage. Par ailleurs, la ligne 102 représente le niveau de la mer à un moment géologique donné. Ainsi, la zone 102m représente dans le modèle de l'eau de mer.

Les surfaces 103 et 104 représentent respectivement la surface aquifère et la surface halocline : ainsi ces deux surfaces 103 et 104 se croisent au point 111 d'intersection entre le niveau de la mer 102 et la formation géologique 101.

Géologiquement

- sous la surface 104 (selon l'axe $\vec{z}$), la formation géologique comporte de l'eau saline ;

- au-dessus de la surface 103 (selon l'axe $\vec{z}$), la formation géologique ne comporte pas d'eau (ou que partiellement) ;

- entre les surfaces 103 et 104, la formation géologique 101 comporte de l'eau douce.

Bien entendu, les surfaces ne sont que des modélisations de phénomènes naturels et les différentes transitions entre les zones décrites précédemment ne sont pas franches (un gradient de transition existe dans une zone de part et d'autre des surfaces 103 et 104).
De manière expérimentale, il a été constaté que la formation de cavités en sous-sol, formée par un phénomène de karstification du sous-sol (ex. roches calcaires) est plus importante autour des surfaces 103 et 104.
Dans le modèle géologique, les surfaces 103 et 104 peuvent être exprimées/reçue de plusieurs façons :

- de manière explicite, la forme de ces surfaces étant reçue explicitement ;

- de manière implicite, seules certaines caractéristiques de ces surfaces étant reçues (ex. la distance D du point 105 au point 111 - distance pour laquelle la surface atteint sa hauteur maximale/minimale ou 95% de sa hauteur maximale/minimale - et la hauteur maximale/maximale ainsi définie au point 105).

Par ailleurs, il est possible de ne recevoir qu'une seule des deux surfaces, en supposant par exemple que la surface 103 permet de déterminer la surface 104 à l'aide d'une symétrie horizontale, puis par l'application d'un facteur d'échelle dans une direction verticale.
De même, il est possible de ne recevoir qu'une seule surface représentant en réalité l'union des surfaces 103 et 104.
Une fois, ces surfaces 103 et 104 définies dans le modèle, il est possible de déterminer une troisième surface 106 permettant de définir, avec les surfaces 103 et 104 un espace fermée du modèle.
La surface 106 est une surface ayant, pour toute section verticale du modèle géologique, une ou des sections linéaires et verticales (i.e. les points 105h, 105, 105b définissent une droite parallèle à l'axe $\vec{z}$ du modèle).
Cette surface 106 peut être définie comme une surface passant par l'ensemble des droites verticales passant par les points 105 tels que définis précédemment.
Ainsi, une fois l'espace fermé défini par les surfaces 103, 104 et 106, il est possible de déterminer une valeur de distance pour tous les points de cet espace, la valeur de distance étant un nombre représentant la proximité relative du point considéré à la surface 103 ou 104 par rapport à la proximité de ce point considéré à la surface 106. Par exemple, la valeur de distance du point 107 $VD_{107}$ peut s'exprimer sous la forme $VD_{107} = \dfrac{\min(d_{1\_107}; d_{2\_107})}{d_{0\_107} + \min(d_{1\_107}; d_{2\_107})}$ avec $d_{0\_107}$ la distance du point 107 à la surface 106, $d_{1\_107}$ la distance du point 107 à la surface 103 et $d_{2\_107}$ la distance du point 107 à la surface 104. De même, la valeur de distance du point 108 $VD_{108}$ peut s'exprimer sous la forme

$VD_{108} = \dfrac{\min(d_{1\_108}; d_{2\_108})}{d_{0\_108} + \min(d_{1\_108}; d_{2\_108})}$ avec $d_{0\_108}$ la distance du point 108 à la surface 106, $d_{1\_108}$ la distance du point 108 à la surface 103 et $d_{2\_108}$ la distance du point 108 à la surface 104. Enfin, la valeur de distance du point 109 $VD_{109}$

peut s'exprimer sous la forme $VD_{109} = \dfrac{\min(d_{1\_109}; d_{2\_109})}{d_{0\_109} + \min(d_{1\_109}; d_{2\_109})}$ avec $d_{0\_109}$ la distance du point 109 à la surface 106, $d_{1\_109}$ la distance du point 109 à la surface 103 et $d_{2\_109}$ la distance du point 109 à la surface 104.

Bien entendu, par souci de simplification, il est considéré que les différentes distances des points mentionnés précédemment (107, 108 et 109) se situent dans le plan de la Figure 1, mais dans des situations plus complexes, et du fait que le modèle géologique est potentiellement un modèle en trois dimensions, les distances peuvent se situer dans un autre plan que le plan de la figure 1.
D'autres méthodes de détermination de la valeur de distances peuvent être envisagées comme par exemple le fait de pondérer certains termes des formules précédentes (en normalisant éventuellement le résultat entre 0 et 1).
Les distances sont des distances au sens mathématique. Ainsi, les distances peuvent être des distances euclidiennes, des distances de Manhattan, des distances de Minkiswski, des distances de Tchebychev ou toutes autres distances.

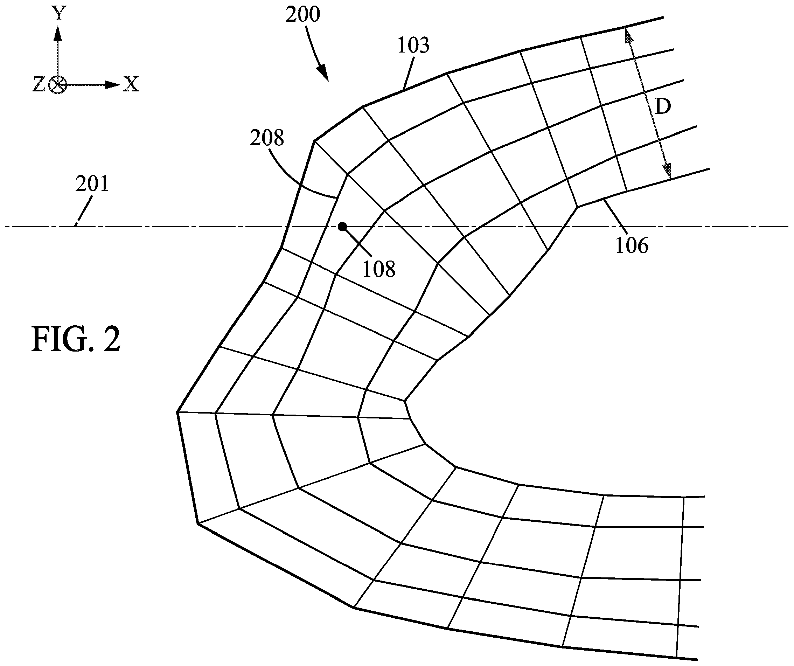

La figure 2 illustre une coupe horizontale 200 dudit modèle géologique 100 selon un plan 110 perpendiculaire au plan de la figure 1. Ainsi, la figure 1 est également une coupe de la figure 2 selon le plan 201 perpendiculaire au plan de la figure 2.

Le modèle géologique est alors représenté sous forme de mailles. Il est possible de définir, pour chaque maille (ex. 208), un point du modèle (ex. 108) correspondant au centre de la maille (ex. son barycentre). Dès lors, il n'existe pas de différence entre le fait d'effectuer une opération (calcul, etc.) pour une maille ou pour un point associé à cette maille.

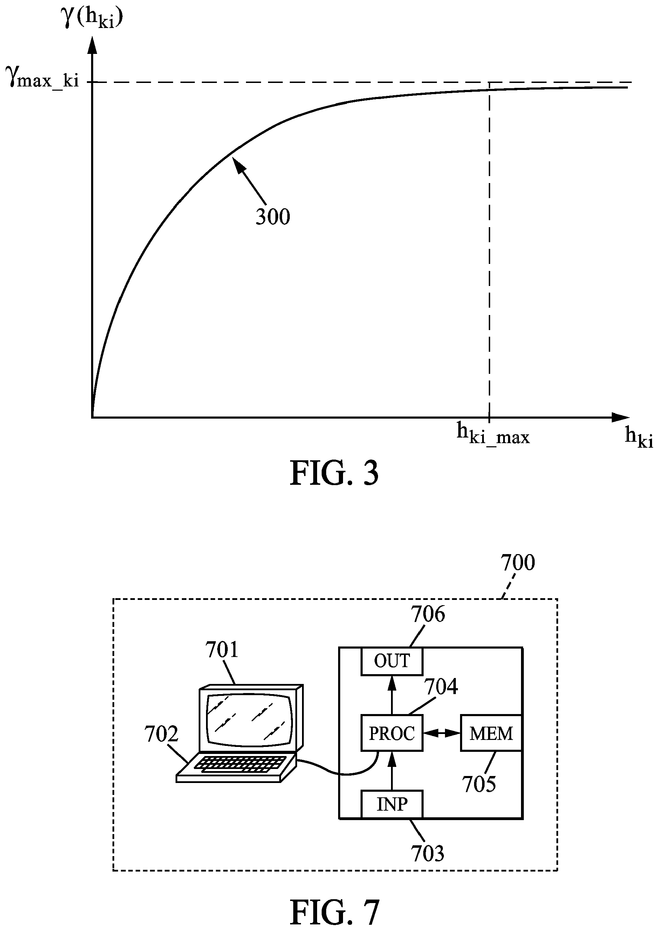

La figure 3 est un exemple de variogramme dans un mode de réalisation particulière de l'invention.

Un variogramme 300 est un outil mathématique permettant, notamment en géostatistique, de définir une évolution spatiale d'une variable aléatoire X. Ainsi, elle permet de définir, en fonction de l'inter-distance $h_{ki}$ de deux points dans la direction $\vec{k_i}$ , une corrélation entre les valeurs prises par cette variable aléatoire X :

$$\gamma(h_{ki}) = \frac{1}{2} E_{|y-x|=h}(|X(x) - X(y)|^2)$$

Ainsi, dans le cadre de la courbe 300, il est possible de constater que la variable aléatoire X ne possède plus de corrélation pour des inter-distances importantes : ainsi, on appelle la portée du variogramme $h_{ki\_max}$ la valeur d'inter-distance pour laquelle le variogramme est supérieur à 95% de sa valeur maximale $y_{max\_ki}$.

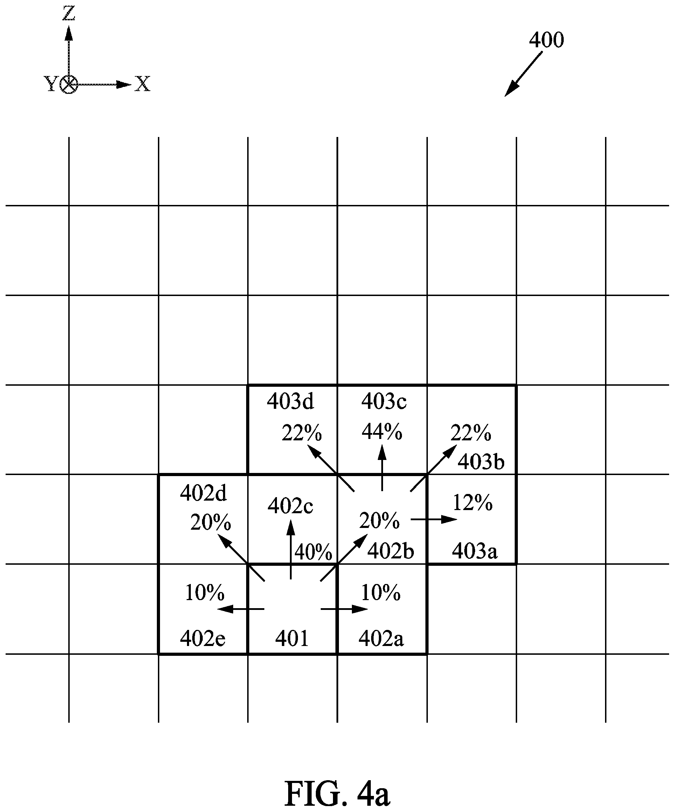

La figure 4a illustre le phénomène d'effondrement des caves dans un mode de réalisation particulière de l'invention.

Pour des raisons de simplicité, le réseau maillé présenté est un réseau régulier, mais les enseignements suivants sont également applicables aux réseaux non réguliers.

Dans le cas de la figure 4a, il est considéré que la proportion de caves/vide de la maille 401 est de 0,75 (i.e. 75% du volume de la maille est constitué de caves et 25% du volume de la maille est constitué de roche matricielle). Cette proportion P peut être calculée aisément si le nombre de caves est connu dans la maille et la taille de ces caves et les dimensions de la maille le sont également. Par exemple :

$$P = \frac{N.\frac{4}{3}\pi a.b.c}{A.B.C}$$

avec la cave de forme elliptique de rayons a, b et c, la maille étant un parallélépipède de dimensions A, B et C, le nombre de caves dans la maille étant N.

Si la maille 401 est déterminée comme étant effondrée, la proportion du modèle affectée par les phénomènes d'effondrement est expérimentalement multipliée par un facteur multiplicateur égal à 4 par rapport à la proportion initiale de caves (tout du moins, cette valeur est proche de 4, par exemple comprise entre 3 et 5).

Néanmoins, si la valeur 0,75 est multipliée par 4, il est possible de voir que la proportion de vide serait supérieure à 1. Dès lors, il est possible de suivre le procédé suivant pour déterminer la proportion finale affectée par les phénomènes d'effondrement dans une maille considérée comme étant effondrée :

- si la valeur de proportion initiale (VPI) de vide multipliée par le facteur multiplicateur (FM) est inférieure à un seuil prédéterminé (SP) (par exemple, 0,9 ou 1), la valeur de proportion finale (VPF) de vide est fixée au résultat de cette multiplication (i.e. VPF=VPI.FM) ;
- si la valeur de proportion initiale (VPI) de vide multipliée par le facteur multiplicateur (FM) est supérieure au seuil prédéterminé (SP),

  - la valeur de proportion finale de vide est fixée au seuil prédéterminé (i.e. VPF=SP) ;

  - la part de la proportion de caves dépassant ledit seuil prédéterminé (i.e. VPI.FM-SP) est ajoutée à la porosité de certaines mailles adjacentes et notamment celles se situant au-dessus de la maille considérée. La répartition de cette part VPI.FM-SP n'est pas nécessairement réalisée de manière égalitaire (i.e. si la répartition de cette part s'effectue dans trois mailles, la proportion de vide de chacune de ces trois mailles n'est pas nécessairement réalisée en tiers).

- Le processus décrit peut alors être réitéré dans les mailles pour lesquels une répartition de la part de la proportion de caves dépassant ledit seuil prédéterminé a été effectuée.

Par exemple, et pour illustrer ce procédé, il est supposé que la maille 401 est indiquée comme étant effondré (cette indication peut être faite par un utilisateur, soit être faite suite à un processus stochastique de détermination d'effondrement de caves - ex. 20% des mailles sont « effondrés » dans le modèle) et que la valeur de seuil prédéterminé est 0,8.

Ainsi, la proportion de caves de la maille 401 (initialement à 0,75) devient 0,8 (soit min(0,8 ; 0,75.4)). La part de la proportion de caves dépassant le seuil prédéterminé est alors de 2,2 (i.e. 4x0,75-0-8).

Dans cet exemple, la répartition de cette part est fixée comme suit :

- 10% vers les mailles adjacentes situées sur le même plan horizontal que la maille 401 (i.e. les mailles 402e et 402a) ;

- 20% vers les mailles adjacentes situées en haut, en diagonale, de la maille 401 (i.e. les mailles 402b et 402d) ;

- 40% vers les mailles adjacentes situées au-dessus de la maille 401 (i.e. la maille 402c) ;

- 0% pour les autres mailles.

Bien entendu, la présente répartition fonctionne dans un modèle à deux dimensions.

Dès lors, la proportion de caves de la maille 402e ou 402a est augmentée de 0,22, la proportion de caves de la maille 402b ou 402d est augmentée de 0,44, et la proportion de caves de la maille 402c est augmentée de 0,88.

Si, par exemple, la proportion de caves de la maille 402b est supérieure à 0,8 (la valeur seuil prédéterminé), il est possible de réitérer le même algorithme (en modifiant éventuellement la répartition comme indiqué sur la figure 4a, car le nombre de cellules adjacentes non déjà « effondré » est différent).

L'effondrement défini précédemment (et caractérisé, par exemple, par un facteur 4) est un effondrement « simple » qui peut se limiter, en pratique, à la maille considérée et aux mailles verticales situées au-dessus de celle-ci. Ainsi, dans un mode de réalisation particulier, il est possible de prévoir que la propagation à la maille 402c n'est pas de 40% seulement mais de 100%.

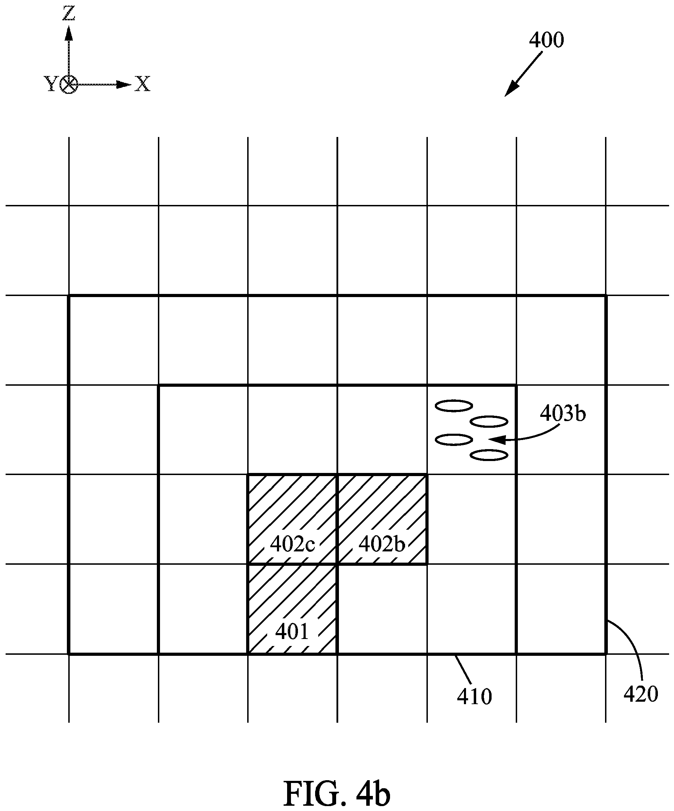

Par ailleurs, il est possible de constater que l'effondrement simple a également un impact sur les mailles alentours en modifiant sa structure : on appelle ce phénomène « extented collapse » en anglais ou « effondrement étendu ». Ce dernier phénomène est illustré à la figure 4b.

Si les mailles 401, 402c et 402b sont considérés comme « effondrées », il est possible de déterminer un nombre déterminé de fronts de propagation de cet « effondrement étendu » :

- le premier front 410 comprenant les mailles adjacentes aux mailles « effondrées » située à une cote z supérieure ou égale à ces mailles« effondrées » (z étant l'axe considéré comme un axe vertical dans le modèle), les mailles du premier front n'étant pas des mailles considérées comme appartenant au collapse étendu (mais uniquement au collapse simple) ;

- le deuxième front 420 comprenant les mailles adjacentes aux mailles du premier front, située à une cote z supérieure ou égale à ces mailles du premier front, les mailles du deuxième front n'étant pas des mailles de collapse étendu ni des mailles du premier front ;

- etc.

Le nombre déterminé de fronts peut être une valeur fixée par un utilisateur externe (ex. 2).

Une fois ces fronts identifiés, il est possible d'exclure, dans un mode de réalisation, les mailles comprenant des mailles ayant des caves (ex. 403b) des mailles des différents fronts.

Dès lors, il est possible d'interpoler en fonction du rang du front considéré une proportion de vide représentant la fragilisation de la roche dans un intervalle allant de la proportion de vide de la matrice (i.e. de la roche sans caves, conduits ou fractures) à la proportion de vide des mailles « effondrées ». Par exemple, si la proportion de la matrice est de 2% et si la proportion de la maille 401 est de 80%, il est possible de déterminer la valeur de proportion des mailles du front n (avec $N_{max}$ le nombre de fronts déterminé) par une interpolation linéaire :

$$P = \left[(2 + 80)\frac{N_{max} + 1 - n}{N_{max} + 1}\right]\%$$

Toute autre interpolation (i.e. autre que linéaire) est possible dans cet intervalle.

La valeur P peut être la nouvelle valeur de proportion de la maille ou une valeur qui s'ajoute à la proportion existante, en fonction du mode de réalisation de l'invention.

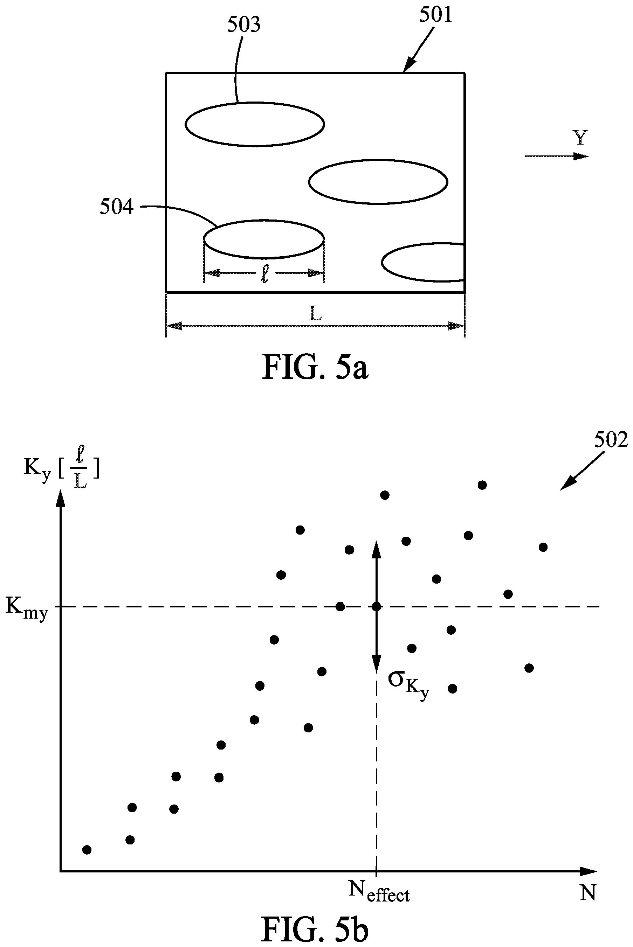

La figure 5 illustre un exemple de calcul de perméabilité d'une maille selon un axe dans un mode de réalisation particulière de l'invention.

Le calcul de la perméabilité d'un modèle constitué d'un grand nombre de mailles comportant elles-mêmes des caves de tailles et de formes différentes peut être complexe et les temps de calcul peuvent être importants.

Ainsi, pour simplifier ce calcul de perméabilité, il est proposé une approche statistique. En effet, il est possible de déterminer expérimentalement ou à l'aide d'outils d'écoulement des fluides classiques des valeurs de perméabilité selon un axe $\vec{y}$ pour une maille de dimension L (selon un axe parallèle à $\vec{y}$) comportant N caves ayant une dimension l (selon un axe parallèle à $\vec{y}$), pour différentes valeurs de N et de l/L.

Cette détermination permet d'obtenir dans une base de données une pluralité de courbe 502 indiquant, pour un rapport l/L donné, la relation statistique en le nombre de caves et la perméabilité $K_y$ selon l'axe $\vec{y}$.

Dès lors, pour une maille donnée du modèle 101 (ayant donc un rapport l/L donné), il est possible de trouver dans la base de données la courbe 502 qui correspond au rapport l/L. Enfin, si la maille donnée comprend $N_{effect}$ caves, il est possible grâce à la courbe 502 de déterminer la perméabilité moyenne $K_{my}$ selon l'axe $\vec{y}$ pour cette maille ainsi que, au besoin, la variance de cette perméabilité $\sigma_{Ky}$.

La figure 6 illustre un ordinogramme 600 d'un procédé de détermination dans un mode de réalisation selon l'invention.

Cet ordinogramme 600 présente un certain nombre d'étapes, toutes les étapes ne sont pas nécessairement indispensables dans l'ensemble des modes de réalisation de l'invention.

Comme indiqué en relation avec la figure 1, il est possible de recevoir un modèle 601 (par exemple, un modèle en trois dimensions maillé) et deux surfaces 602 et 603 (respectivement une surface représentant la surface halocline du modèle et une surface représentant la surface aquifère du modèle). Bien entendu, les surfaces 602 et 603 peuvent constituer une unique surface 604 (i.e. union de ces surfaces).

Une fois reçues, il est possible de déterminer (étape 605), comme détaillé ci-dessus, une troisième surface verticale dans le modèle (un axe étant pris comme étant une direction « verticale » de ce modèle) et permettant de définir un espace fermé avec les surfaces 602 et 603.

Dès lors, pour tous les points de coordonnées $X_i$ ($x_i \in \mathbf{R}^3$) de l'espace fermée, il est possible de définir (étape 606) une valeur de distance comprise entre 0 et 1 et comme détaillé ci-dessus.

Une fois la valeur de distance définie pour tous les points $x_i$, il est possible de réaliser une série de tirage aléatoire afin de déterminer (étape 607) si le point de coordonnées $x_i$ est un point pour lequel des caves existent dans le modèle. Cette détermination peut être fonction d'une moyenne M (608) connues de la proportion de caves pour ces points $x_i$. Si seule la moyenne M est utilisée pour cette détermination, il est par exemple possible de réaliser des tirages aléatoires d'une variable continue et constante sur l'intervalle [0 ;1] et si le résultat de ce tirage est inférieur à M, le point $x_i$ est marqué comme étant associé à des caves dans le modèle.

Néanmoins, comme il peut être souhaitable que les caves déterminées soient proches des surfaces 602 et 603 (voir surfaces 103 et 104 de la figure 1) car il est constaté expérimentalement que le phénomène de karstification de cavités se situe à proximité de ces surfaces. Ainsi, il est possible de réaliser une cosimulation avec la moyenne M comme variable principale et la distance déterminée à l'étape 606 comme variable auxiliaire.

Par exemple, si la variable aléatoire C représente la probabilité de présence d'une cave pour le point $x_i$, il serait possible d'écrire :

$$C(x_i) = M + \alpha(VD(x_i) - \overline{VD})$$

avec VD($x_i$) la valeur de distance pour le point xi, $\overline{VD}$ la moyenne des valeurs de distances pour tous les points de l'espace fermé défini précédemment, a une variable de pondération comprise entre 0 et 1.

En outre, il est possible de faire intervenir un ou plusieurs variogrammes $\gamma$ (ex. un par axe du repère du modèle) afin de corréler les différents tirages aléatoires dans le modèle :

$$C(x_i) = M + \sum_{l=1}^{N_{princ}} \lambda_l(C(x_l) - \overline{C_l}) + \sum_{m=1}^{N_{aux}} \nu_m(VD(x_m) - \overline{VD})$$

avec en outre $N_{princ}$ le nombre de points d'une zone autour du point $x_i$ situés à une distance égale à la portée du variogramme (ou une autre distance prédéterminée) pour lesquels une détermination de présence de caves a déjà été effectuée, $N_{aux}$ le nombre de points d'une zone autour du point $x_i$ situés à une distance égale à la portée du variogramme (ou une autre distance prédéterminée), $\overline{C_l}$ la moyenne des valeurs de $C(x_i)$ pour les points $x_i$ situés à une distance égale à la portée du variogramme (ou une autre distance prédéterminée), $\lambda_l$ et $v_m$ étant déterminée à l'aide du variogramme (par exemple, par une résolution exacte d'un système d'équations, par la méthode dite de « l'hypothèse de colocalisation » - ou « collocated assumption » en anglais - ou encore la méthode dite FFT).

Une fois l'existence des caves déterminées pour chacun des points $x_i$ de l'espace fermé défini, il est possible de déterminer la taille des caves associées à chaque point $x_k$ pour lesquels la présence effective de caves a été déterminée. En première approche, il est possible de considérer que toutes les caves associées à une même cellule (ou point en fonction de la représentation choisie) possèdent les mêmes dimensions. Afin de déterminer (étape 609) les dimensions des caves pour un point $x_k$, il est possible de recevoir (610) une distribution DISTR de probabilité de la taille desdites caves. De manière analogue à l'étape 607, il est également possible de prendre en compte la valeur de distance déterminée à l'étape 606. Par ailleurs, et de manière similaire à l'étape 607, il est possible de recevoir un variogramme $\gamma$ (610) qui peut être identique au variogramme 608 ou propre à la taille des caves.

Il est également possible de déterminer (étape 611) le nombre de caves associées à chaque point $x_k$ pour lesquels la présence effective de caves a été déterminée. Cette détermination peut être effectuée après l'étape 609, avant l'étape 609 ou même en parallèle. Afin de déterminer (étape 609) le nombre des caves pour un point $x_k$, il est possible de recevoir (612) une distribution DISTR de probabilité du nombre de caves. De manière analogue à l'étape 607, il est également possible de prendre en compte la valeur de distance déterminée à l'étape 606. Par ailleurs, et de manière similaire à l'étape 607, il est possible de recevoir un variogramme $\gamma$ (612) qui peut être identique au variogramme 608, au variogramme 610 ou propre au nombre de caves.

Il est également possible, pour les points $x_k$ pour lesquels la présence effective de caves a été déterminée de procéder à l'effondrement (étape 613) des caves comme détaillé en relation avec la figure 4a. Les caves qui sont « effondrées » peuvent être sélectionnées par un utilisateur ou tirées au sort parmi les points $x_k$ du modèle.

Enfin, il est possible de déterminer (étape 614), pour tout point $x_i$ de l'espace fermé défini, une perméabilité K pour chaque direction du repère du modèle (moyenne et variance) à l'aide de la méthode décrite en relation avec la figure 5.

Dès lors, la perméabilité globale du modèle peut être déterminée sans difficulté à l'aide d'outils classiques.

La figure 7 représente un exemple de dispositif de détermination dans un mode de réalisation de l'invention.

Dans ce mode de réalisation, le dispositif comporte un ordinateur 700, comprenant une mémoire 705 pour stocker des instructions permettant la mise en œuvre du procédé, les données de mesures reçues, et des données temporaires pour réaliser les différentes étapes du procédé tel que décrit précédemment.

L'ordinateur comporte en outre un circuit 704. Ce circuit peut être, par exemple :

- un processeur apte à interpréter des instructions sous la forme de programme informatique, ou

- une carte électronique dont les étapes du procédé de l'invention sont décrites dans le silicium, ou encore

- une puce électronique programmable comme une puce FPGA (pour « Field-Programmable Gâte Array » en anglais).

Cet ordinateur comporte une interface d'entrée 703 pour la réception de données de modèles, de surfaces, et une interface de sortie 706 pour la fourniture des résultats. Enfin, l'ordinateur peut comporter, pour permettre une interaction aisée avec un utilisateur, un écran 701 et un clavier 702. Bien entendu, le clavier est facultatif, notamment dans le cadre d'un ordinateur ayant la forme d'une tablette tactile, par exemple.

Par ailleurs, le schéma fonctionnel présenté sur la figure 6 est un exemple typique d'un programme dont certaines instructions peuvent être réalisées auprès de l'équipement décrit. À ce titre, la figure 6 peut correspondre à l'organigramme de l'algorithme général d'un programme informatique au sens de l'invention.

Bien entendu, la présente invention ne se limite pas aux formes de réalisation décrites ci-avant à titre d'exemple ; elle s'étend à d'autres variantes. L'invention est définie par les revendications ci-jointes.

D'autres réalisations sont possibles.

Par exemple, si le modèle représenté dans les différents exemples de la description est un modèle en trois dimensions, il est également possible d'utiliser des modèles en deux dimensions.

## Revendications

1. Procédé mis en place par ordinateur de détermination d'une localisation de caves karstifiées (503, 504) dans un modèle géologique (100, 601),
le procédé comportant les étapes :

- réception d'un modèle géologique (601) ;
- réception d'une première surface (602, 103) et d'une deuxième surface(603, 104), lesdites première et deuxième surfaces étant définies dans ledit modèle géologique, la première surface intersectant (111) la deuxième surface ;
- détermination (605) d'une troisième surface (106) dans ledit modèle, ladite troisième surface intersectant la première et la deuxième surface (105h, 105b) et définissant avec la première surface et deuxième surface un espace fermé dudit modèle ;
- pour chaque point courant (109, 108, 107) d'un ensemble de points de l'espace fermé, détermination (606) d'une valeur de distance en fonction :

  - d'une première distance dudit point courant à l'union de la première surface et de la deuxième surface ;
  - d'une deuxième distance dudit point courant à la troisième surface (($d_{0\_109}$, $d_{0\_108}$, $d_{0\_107}$) ;

  la valeur de distance étant un nombre représentant la proximité du point considéré à la première surface ou à la deuxième surface par rapport à la proximité à la troisième surface,
- réception d'une valeur de moyenne (608) connue de la proportion de caves ;
- pour chaque point courant dudit ensemble de points de l'espace fermé, détermination (607) d'une présence de caves pour ledit point courant, cette détermination de la présence de caves étant fonction au moins de la valeur de moyenne reçue et de la valeur de distance déterminée pour ledit point courant.

2.   Procédé selon la revendication 1, dans lequel la détermination de la présence de caves pour ledit point courant est également fonction d'un variogramme (608).

3.   Procédé selon l'une des revendications précédentes, dans lequel le procédé comprend en outre :

- pour chaque point courant des points pour lesquels une présence de caves est déterminée, détermination (609) de la taille desdites caves, la détermination de la taille desdites caves étant fonction d'au moins une distribution de tailles de caves (610) et de la valeur de distance déterminée pour ledit point courant.

4.   Procédé selon l'une des revendications précédentes, dans lequel le procédé comprend en outre :

- pour chaque point courant des points pour lesquels une présence de caves est déterminée, détermination (611) d'un nombre de caves, la détermination dudit nombre de caves étant fonction d'au moins une distribution de nombre de caves (612) et de la valeur de distance déterminée pour ledit point courant.

5.   Procédé selon l'une des revendications précédentes, dans lequel le procédé comprend en outre :

- pour chaque point courant des points pour lesquels une présence de caves est déterminée,

  - détermination (613) d'un effondrement de caves pour ledit point courant, cette détermination étant fonction d'une probabilité d'effondrement, et
  - en cas de présence de caves déterminée, multiplication d'une proportion de caves associée au point courant par un facteur compris entre 3 et 5, le résultat de la multiplication étant appelé proportion de matériau effondré.

6.   Procédé selon la revendication 5, dans lequel la multiplication de la proportion de caves associée au point courant est effectuée par un facteur 4.

7.   Procédé selon la revendication 5 ou 6, dans lequel si la proportion de caves associée au point courant devient supérieure à un seuil prédéterminé :

- la part de la proportion de matériau effondré dépassant ledit seuil prédéterminé est ajoutée à la porosité de points adjacents au point courant,
- la proportion de matériau effondré du point courant est fixée au seuil prédéterminé.

8. Procédé de détermination de caractéristiques de perméabilité d'un modèle géologique, ledit procédé comprenant :

- détermination d'une localisation de caves karstifiées dans ledit modèle géologique par le procédé selon l'une des revendications 1 à 7 ;
- détermination, pour chaque point courant des points pour lesquels la présence de caves a été déterminée, au moins une valeur de perméabilité (613) en fonction d'une taille de caves pour ledit point et d'un nombre de caves pour ledit point.

9. Produit programme informatique comportant des instructions pour la mise en œuvre du procédé selon l'une des revendications 1 à 8, lorsque ce programme est exécuté par un processeur.

10. Dispositif de détermination d'une localisation de caves karstifiées dans un modèle géologique, le dispositif comportant :

- une interface (703) pour recevoir un modèle géologique et pour recevoir d'une première surface et d'une deuxième surface, lesdites première et deuxième surfaces étant définies dans ledit modèle géologique, la première surface intersectant la deuxième surface ;
- un circuit (704) pour déterminer une troisième surface dans ledit modèle, ladite troisième surface intersectant la première et la deuxième surface et définissant avec la première surface et deuxième surface un espace fermé dudit modèle ;
- pour chaque point courant d'un ensemble de points de l'espace fermé, ledit circuit (704) étant adapté pour déterminer une valeur de distance en fonction

- d'une première distance dudit point courant à l'union de la première surface et de la deuxième surface ;
- d'une deuxième distance dudit point courant à la troisième surface ; la valeur de distance étant un nombre représentant la proximité du point considéré à la première surface ou à la deuxième surface par rapport à la proximité à la troisième surface,

- Z ladite interface (703) étant adaptée pour recevoir une valeur de moyenne connue de la proportion de caves ;
- pour chaque point courant dudit ensemble de points de l'espace fermé, ledit circuit (704) étant adapté pour déterminer d'une présence de caves pour ledit point courant, cette détermination de la présence de caves étant fonction au moins de la valeur de moyenne reçue et de la valeur de distance déterminée pour ledit point courant.

## Patentansprüche

1. Computerimplementiertes Verfahren zur Bestimmung eines Orts von verkarsteten Höhlen (503, 504) in einem geologischen Modell (100, 601), wobei das Verfahren die folgenden Schritte aufweist:

- Empfangen eines geologischen Modells (601);
- Empfangen einer ersten Fläche (602, 103) und einer zweiten Fläche (603, 104), wobei die erste und zweite Fläche in dem geologischen Modell definiert sind, die erste Fläche die zweite Fläche schneidet (111);
- Bestimmen (605) einer dritten Fläche (106) in dem Modell, wobei die dritte Fläche die erste und die zweite Fläche schneidet (105h, 105b) und mit der ersten Fläche und zweiten Fläche einen geschlossenen Raum des Modells definiert;
- für jeden aktuellen Punkt (109, 108, 107) einer Gesamtheit von Punkten des geschlossenen Raums, Bestimmen (606) eines Abstandswerts als Funktion:
- eines ersten Abstands des aktuellen Punkts zu der Vereinigung der ersten Fläche und der zweiten Fläche;
- eines zweiten Abstands des aktuellen Punkts zu der dritten Fläche ($d_{0\_109}$, $d_{0\_08}$, $d_{0\_107}$);
wobei der Abstandswert eine Zahl ist, die die Nähe des betrachteten Punkts zur ersten Fläche oder zur zweiten Fläche in Bezug auf die Nähe zur dritten Fläche repräsentiert,
- Empfangen eines bekannten Durchschnittswerts (608) des Höhlenverhältnisses;
- für jeden aktuellen Punkt der Gesamtheit von Punkten des geschlossenen Raums, Bestimmen (607) eines Vorhandenseins von Höhlen für den aktuellen Punkt, wobei diese Bestimmung des Vorhandenseins von Höhlen Funktion zumindest des empfangenen Durchschnittswerts und des für den aktuellen Punkt bestimmten Abstandswerts ist.

2. Verfahren nach Anspruch 1, in welchem das Bestimmen des Vorhandenseins von Höhlen für den aktuellen Punkt außerdem eine Funktion eines Variogramms (608) ist.

3. Verfahren nach einem der vorstehenden Ansprüche, in welchem das Verfahren desweiteren aufweist:

- für jeden aktuellen Punkt von Punkten, für die ein Vorhandensein von Höhlen bestimmt worden ist, Bestimmen (609) der Größe der Höhlen, wobei die Bestimmung der Größe der Höhlen Funktion zumindest einer Höhlengrößenverteilung (610) und des für den aktuellen Punkt bestimmten Abstandswerts ist.

4. Verfahren nach einem der vorstehenden Ansprüche, in welchem das Verfahren desweiteren aufweist:

- für jeden aktuellen Punkt von Punkten, für die ein Vorhandensein von Höhlen bestimmt worden ist, Bestimmen (611) einer Höhlenanzahl, wobei die Bestimmung der Höhlenanzahl Funktion zumindest einer Höhlenanzahlverteilung (612) und des für den aktuellen Punkt bestimmten Abstandswerts ist.

5. Verfahren nach einem der vorstehenden Ansprüche, in welchem das Verfahren desweiteren aufweist:

- für jeden aktuellen Punkt von Punkten, für die ein Vorhandensein von Höhlen bestimmt worden ist,
- Bestimmen (613) eines Höhleneinsturzes für den aktuellen Punkt, wobei diese Bestimmung Funktion einer Einsturzwahrscheinlichkeit ist, und
- im Fall eines bestimmten Vorhandenseins von Höhlen, Multiplizieren eines mit dem aktuellen Punkt verknüpften Höhlenverhältnisses mit einem Faktor, der zwischen 3 und 5 beträgt, wobei das Ergebnis der Multiplikation als Einsturzmaterialverhältnis bezeichnet wird.

6. Verfahren nach Anspruch 5, in welchem die Multiplikation des mit dem aktuellen Punkt verknüpften Höhlenverhältnisses mit einem Faktor 4 durchgeführt wird.

7. Verfahren nach Anspruch 5 oder 6, in welchem für den Fall, dass das mit dem aktuellen Punkt verknüpfte Höhlenverhältnis größer als eine vorgegebene Schwelle wird:

- der Teil des Einsturzmaterialverhältnisses, der die vorgegebene Schwelle überschreitet, der Porosität von Punkten, die dem aktuellen Punkt benachbart sind, hinzugefügt wird,
- das Einsturzmaterialverhältnis des aktuellen Punkts bei der vorgegebenen Schwelle fixiert wird.

8. Verfahren zur Bestimmung von Permeabilitätseigenschaften eines geologischen Modells, wobei das Verfahren aufweist:

- Bestimmen eines Orts von verkarsteten Höhlen in dem geologischen Modell mit Hilfe des Verfahrens nach einem der Ansprüche 1 bis 7;
- für jeden aktuellen Punkt von Punkten, für die das Vorhandensein von Höhlen bestimmt worden ist, Bestimmen mindestens eines Permeabilitätswerts (613) als Funktion einer Höhlengröße für den Punkt und einer Höhlenanzahl für den Punkt.

9. Computerprogrammprodukt aufweisend Befehle, um das Verfahren nach einem der Ansprüche 1 bis 8 durchzuführen, wenn dieses Programm von einem Prozessor ausgeführt wird.

10. Vorrichtung zur Bestimmung eines Orts von verkarsteten Höhlen in einem geologischen Modell, wobei die Vorrichtung aufweist:

- eine Schnittstelle (703) zum Empfangen eines geologischen Modells und zum Empfangen einer ersten Fläche und einer zweiten Fläche, wobei die erste und zweite Fläche in dem geologischen Modell definiert sind, die erste Fläche die zweite Fläche schneidet;
- eine Schaltung (704) zum Bestimmen einer dritten Fläche in dem Modell, wobei die dritte Fläche die erste und die zweite Fläche schneidet und mit der ersten Fläche und zweiten Fläche einen geschlossenen Raum des Modells definiert;
- wobei für jeden aktuellen Punkt einer Gesamtheit von Punkten des geschlossenen Raums die Schaltung (704) konfiguriert ist, um einen Abstandswert zu bestimmen als Funktion:
- eines ersten Abstands des aktuellen Punkts zu der Vereinigung der ersten Fläche und der zweiten Fläche;
- eines zweiten Abstands des aktuellen Punkts zu der dritten Fläche;

wobei der Abstandswert eine Zahl ist, die die Nähe des betrachteten Punkts zur ersten Fläche oder zur zweiten Fläche in Bezug auf die Nähe zur dritten Fläche repräsentiert,

- wobei die Schnittstelle (703) konfiguriert ist, um einen bekannten Durchschnittswert des Höhlenverhältnisses zu empfangen;
- wobei für jeden aktuellen Punkt der Gesamtheit von Punkten des geschlossenen Raums die Schaltung (704) konfiguriert ist, um ein Vorhandensein von Höhlen für den aktuellen Punkt zu bestimmen, wobei diese Bestimmung des Vorhandenseins von Höhlen Funktion zumindest des empfangenen Durchschnittswerts und des für den aktuellen Punkt bestimmten Abstandswerts ist.

**Claims**

1. Method implemented by computer means for determining a location of karst caves (503, 504) in a geological model (100, 601),

   the method comprising the steps of:

   - receiving a geological model (601);
   - receiving a first surface (602, 103) and a second surface (603, 104), said first and second surfaces being defined in said geological model, with the first surface intersecting (111) the second surface;
   - determining (605) a third surface (106) in said model, said third surface intersecting the first and the second surface (105h, 105b) and defining with the first surface and second surface a closed space of said model;
   - for each current point (109, 108, 107) of a set of points of the closed space, determining (606) a distance value depending on:

     -- a first distance from said current point to the union of the first surface and of the second surface;
     -- a second distance from said current point to the third surface ($(d_{0-109}, d_{0\_108}, d_{0\_107})$; the distance value being a number representing the proximity of the considered point to the first surface or to the second surface with respect to the proximity to the third surface;

   - receiving a known average value (608) of a proportion of caves;
   - for each current point of said set of points of the closed space, determining (607) a presence of caves for said current point, with this determination of the presence of caves depending at least on the received average value and on the distance value determined for said current point.

2. Method according to claim 1, wherein the determination of the presence of caves for said current point is also a function of a variogram (608).

3. Method according to one of the preceding claims, wherein the method further comprises:

   - for each current point of the points for which a presence of caves is determined, determining (609) the size of said caves, with the determination of the size of said caves depending on at least one distribution of sizes of caves (610) and on the distance value determined for said current point.

4. Method according to one of the preceding claims, wherein the method further comprises:

   - for each current point of the points for which a presence of caves is determined, determining (611) a number of caves, with the determination of said number of caves depending on at least one distribution of the number of caves (612) and on the distance value determined for said current point.

5. Method according to one of the preceding claims, wherein the method further comprises:

   - for each current point of the points for which a presence of caves is determined,
   - determining (613) a number of caves for said current point, with this determination depending on a probability of collapse, and
   - in the case of a determined presence of caves, multiplication of a proportion of caves associated with the current point by a factor between 3 and 5, with the result of the multiplication being referred to as proportion of collapsed material.

6. Method according to claim 5, wherein the multiplication of the proportion of caves associated with the current point is carried out by a factor 4.

7. Method according to claim 5 or 6, wherein if the proportion of caves associated with the current point becomes greater than a predetermined threshold:

- the portion of the proportion of collapsed material exceeding said predetermined threshold is added to the porosity of points adjacent to the current point,
- the proportion of collapsed material of the current point is set to the predetermined threshold.

8. Method for determining characteristics of permeability of a geological model, said method comprising:

- determining a location of karst caves in said geological model by the method according to one of claims 1 to 7;
- determining, for each current point of the points for which the presence of caves has been determined, at least one permeability value (613) depending on a size of caves for said point and on a number of caves for said point.

9. Computer program product comprising instructions for the implementation of the method according to one of claims 1 to 8, when this program is executed by a processor.

10. Device for determining a location of karst caves in a geological model,
with the device comprising:

- an interface (703) for receiving a geological model and for receiving a first surface and a second surface, said first and second surfaces being defined in said geological model, with the first surface intersecting the second surface;
- a circuit (704) for determining a third surface in said model, said third surface intersecting the first and the second surface and defining with the first surface and second surface a closed space of said model;
- for each current point of a set of points of the closed space, the circuit (704) being adapted for determining a distance value depending on:
- a first distance from said current point to the union of the first surface and of the second surface;
- a second distance from said current point to the third surface;
the distance value being a number representing the proximity of the considered point to the first surface or to the second surface with respect to the proximity to the third surface;
- the interface (703) being adapted for receiving a known average value of a proportion of caves;
- for each current point of said set of points of the closed space, the circuit (704) being adapted for determining a presence of caves for said current point, with this determination of the presence of caves depending at least on the received average value and on the distance value determined for said current point.

FIG. 1

EP 3 164 743 B1

FIG. 2

FIG. 3

FIG. 7

FIG. 4a

FIG. 4b

FIG. 5a

FIG. 5b

# FIG. 6

**EP 3 164 743 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2994309